# FASCICULE DE BREVET EUROPEEN

(11) **EP 1 812 224 B1**
(45) Date de publication et mention de la délivrance du brevet: **19.05.2010**
(21) Numéro de dépôt: 05815500.3
(22) Date de dépôt: 21.10.2005
(51) Int. Cl.: B29C 70/24, B29C 70/86, B29C 70/08

(54) **INSERT EN MATÉRIAU COMPOSITE ET SON PROCÉDÉ DE FABRICATION, ET PROCÉDÉ DE RÉALISATION D'UNE STRUCTURE SANDWICH COMPORTANT UN TEL INSERT**
EINSATZ FÜR VERBUNDWERKSTOFF UND HERSTELLUNGSVERFAHREN DAFÜR SOWIE VERFAHREN ZUR HERSTELLUNG EINER SANDWICH-STRUKTUR MIT DEM EINSATZ
COMPOSITE MATERIAL INSERT AND METHOD FOR THE PRODUCTION THEREOF, AND METHOD FOR CREATING A SANDWICH STRUCTURE COMPRISING SAID INSERT

(30) Priorité: 27.10.2004 FR 0452462
(43) Date de publication de la demande: 01.08.2007
(73) Titulaire: ASTRIUM SAS, 75016 Paris (FR)
(72) Inventeur: CAHUZAC, Georges, F-33110 LE BOUSCAT (FR); GAUTHIER, Jack, F-33870 VAYRES (FR); CHOCHEYRAS, Eric, 92300 LEVALLOIS-PERRET (FR)
(74) Mandataire: Schmit, Christian Norbert Marie
(86) Numéro de dépôt international: PCT/FR2005/050886
(87) Numéro de publication internationale: WO 2006/045976

(56) Documents cités:
- EP-A- 0 903 216
- DE-A1- 10 235 509
- DE-A1- 19 834 772
- DE-U1- 20 314 187
- FR-A- 2 832 738
- US-A- 5 079 055
- US-B1- 6 450 450

## Description

La présente invention concerne conformément à la revendication 1 un procédé de fabrication d'un insert en matériau composite. La présente invention a pour objet également un procédé de réalisation d'une structure sandwich comportant un insert produit selon ce procédé.

Les structures sandwich en matériau composite présentent des propriétés, notamment mécaniques, exceptionnelles. Elles combinent une résistance élevée aux contraintes mécaniques et/ou thermiques et une forte rigidité pour une masse minimale.

Ces structures sont donc largement mises en oeuvre dans l'industrie spatiale (satellites, sondes, lanceurs) et dans l'industrie aéronautique (trappes, portes, bords d'attaque, ailerons, cloisons intérieures, etc,...).

On connaît de nombreux procédés pour fabriquer ces structures composites, lesquelles comprennent deux peaux reliées par une âme. Cette âme travaille peu et est généralement constituée d'un matériau de faible masse et/ou à faibles propriétés mécaniques. On utilise donc soit un matériau expansé du type structure en nid d'abeilles ou mousse, soit de simples fils de liaison.

Cependant, la fixation de et sur ces structures sandwich pose des problèmes. L'âme et les peaux, en raison de leur faible épaisseur, ont des propriétés mécaniques insuffisantes pour supporter une charge concentrée en un point de la structure sandwich telle que celle occasionnée par des moyens de fixation, une vis par exemple.

Des inserts ont donc été développés pour réaliser l'interfaçage des moyens de fixation et de la structure sandwich, et répartir ainsi les efforts de liaison qui sont locaux sur un plus grand volume de la structure sandwich. Ces inserts sont mis en oeuvre dans des structures sandwich réalisées aussi bien à partir de peaux en matériau composite, que de peaux en matériau métallique.

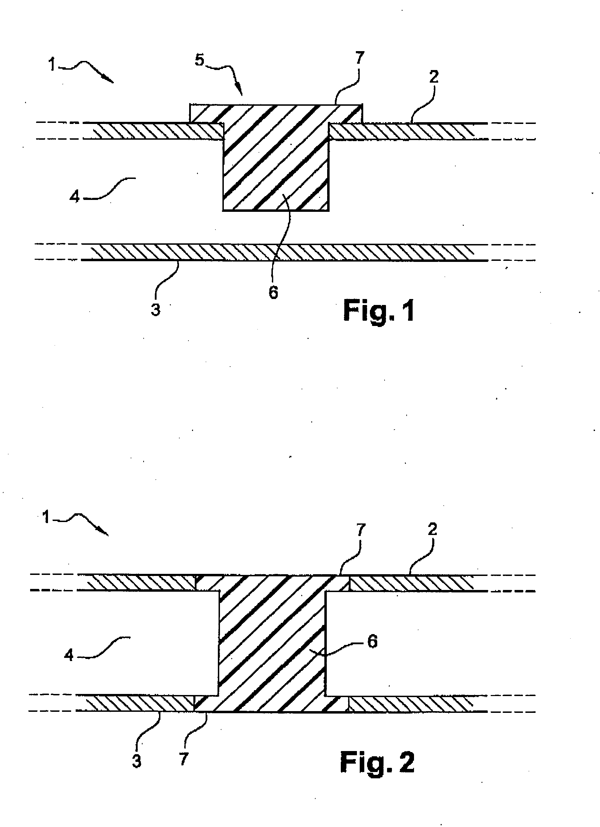

La Figure 1 montre un mode de réalisation particulier de structure sandwich de l'art antérieur comprenant un tel insert. La structure sandwich 1 comporte deux peaux 2,3 comprenant des fibres textiles très résistantes telles que des fibres de carbone et une âme 4 en nid d'abeilles, dans laquelle les peaux 2,3 sont assemblées à l'âme 4 par polymérisation d'une résine. Un évidement est formé à l'aide d'un outil coupant dans une des peaux 2 et sur une grande partie de l'épaisseur de l'âme 4. Un insert 5 métallique comprenant un corps 6 et une bride 7, ou tête large est placé dans cet évidement de sorte que la bride 7 recouvre la surface externe de la peau 2 comportant l'orifice. Une couche adhésive peut être disposée entre la bride 7 et la surface externe de la peau 2 pour assurer l'étanchéité de la structure sandwich 1. Cette tête large permet avantageusement de distribuer une charge sur une zone relativement large de la peau 2,3.

Bien entendu, l'évidement peut être débouchant, un orifice étant réalisé dans chacune des peaux de sorte que le corps de l'insert 5 traverse l'épaisseur entière de l'âme 4 (Figure 2).

Les inserts standard sont réalisés à partir d'alliages en aluminium, en titane ou encore en Invar.

L'assemblage de l'insert et de la structure sandwich doit être de la meilleure qualité possible afin d'éviter un éventuel desserrement de l'insert pouvant entraîner un endommagement de la structure sandwich, par exemple une corrosion. Toutefois, pour réaliser un collage de qualité, il faut faire subir aux inserts une bonne préparation de surface. Mais en pratique cette préparation est difficile à réaliser même pour l'aluminium. C'est vrai en particulier, pour le titane, par exemple, et encore plus pour l'acier inoxydable et l'Invar.

Ces matériaux sont de plus relativement denses, ce qui les rend peu compatibles avec les impératifs de fabrication des engins spatiaux où l'optimisation des masses est un vrai challenge.

On connaît également par le document EP 0 903 216 un procédé pour réaliser une zone rigidifiée formant insert destinée à accueillir un système de fixation à l'intérieur d'un panneau composite du type sandwich à une âme alvéolaire. Selon ce procédé, on positionne une platine de renfort à un endroit déterminé sur la face interne d'une partie d'un moule de formage, cette platine étant pourvue de picots, on place dans le moule de formage le matériau sandwich à âme alvéolaire, on presse le matériau par fermeture du moule de formage, pour former le panneau, de sorte que le panneau épouse la forme de la platine de renfort qui s'ancre par l'intermédiaire de ses picots dans ce dernier.

Le document US 5 079 055 divulgue, par ailleurs, un insert pour une structure stratifiée en plastique consistant en au moins deux couches plastifiées liées l'une à l'autre, l'insert ayant un corps formé à partir d'un matériau en plastique synthétique, les axes de longueur X et de largeur Y de l'insert étant placés dans un premier plan et l'axe d'épaisseur Z étant placé dans un second plan perpendiculaire au premier plan, un premier ensemble de fibres de renforcement étant placé parallèlement au premier plan et un second ensemble de fibres de renforcement étant placé parallèlement au second plan.

Toutefois, un problème de compatibilité thermique entre l'insert et la structure sandwich se pose également. Ce problème est particulièrement sensible pour les applications spatiales, où les structures sont exposées à des modifications de température extrêmes résultant de la variation à l'exposition au soleil de l'engin spatial. Ces températures peuvent ainsi varier de -250°C à + 200°C, par exemple. Il se crée alors des contraintes à la liaison entre la structure sandwich et l'insert, qui résultent de différences entre les coefficients de dilatation thermique des matériaux. Ces contraintes peuvent entraîner une détérioration de la cette liaison.

Ce problème peut également survenir lors des opérations de fabrication, l'assemblage de la structure sandwich et de l'insert peut en effet nécessiter de passer des cycles de température entre 0°C et 200°C, par exemple lors de collage à chaud, de sorte que des défauts peuvent apparaître à la liaison entre la structure sandwich et l'insert, le produit final n'atteignant pas les propriétés mécaniques attendues.

On connaît par ailleurs des inserts en matériaux composites obtenus par stratification de fibres imprégnées de résine, par exemple de fibres de carbone et d'une résine époxy. Ces inserts répondent en partie aux problèmes posés par les contraintes de masse, de dilatations thermiques et d'assemblage. Cependant, ces inserts ne présentent de bonnes propriétés que dans le plan de l'insert, c'est-à-dire dans les directions où des fibres sont présentes. Hors du plan, dans l'épaisseur, seule la résine travaille. Or, il est bien connu que les résines ont des propriétés mécaniques très faibles. Ces inserts ne présentent donc pas un comportement satisfaisant vis-à-vis des efforts de traction exercés par des moyens de serrage tels que des vis, voire aux seuls efforts des cycles thermiques lors de l'assemblage de l'insert et de la structure sandwich. Des délaminages peuvent apparaître à l'usage ou dés la fabrication, lesquels sont susceptibles de résulter en une fracture de la pièce.

L'objectif de la présente invention est de proposer un procédé de fabrication d'un insert simple dans sa conception et dans son mode opératoire, économique, léger et permettant une reprise des efforts au niveau des fixations sans délaminage selon la revendication 1.

Cet insert est monolithique, c'est-à-dire qu'il est constitué de nappes superposées de fibre solidarisées directement entre elles par des fibres et noyées dans une matrice durcie, sans interposition entre ces nappes par exemple d'une âme en matériau expansé comme dans les structures sandwichs. Cet insert usinable aux cotes requises peut avantageusement prendre toute forme (rectangulaire, cylindrique, ...) adaptée à son application. De plus, cet insert peut être percé et taraudé pour permettre des assemblages par vis ou tout autre élément de fixation.

Un autre objet de l'invention est un procédé particulièrement simple de réalisation d'une structure sandwich comportant un tel insert. Ce procédé permet avantageusement une co-cuisson avec le collage sur l'âme d'au moins deux peaux d'une part et avec le collage de l'insert avec la structure sandwich d'autre part sans traitement de surfaces complexes de l'insert.

Il est à noter que l'homme du métier, désirant résoudre le problème posé par la reprise des efforts à partir d'un insert en matériau composite, sans détérioration de ce dernier lors de l'application de faibles contraintes mettra naturellement en oeuvre des techniques connues, par exemple l'utilisation de copolymères greffés ou séquencés pour améliorer la liaison entre la matrice et les fibres de carbone telle qu'enseignée dans le brevet US 3,855,174. Ces techniques ne donnent cependant pas de résultats satisfaisants pour des contraintes de traction plus grandes. La matrice limite, en effet, la tenue de ces inserts au délaminage. La mise en oeuvre d'un insert en matériau composite comprenant des fibres dans les trois directions de l'espace apparaît comme une solution surprenante pour un spécialiste des produits composites. En effet, comme il sera décrit plus loin, la fabrication de l'insert selon l'invention nécessite d'une part un compromis entre le taux de fibre contenue dans le plan de chaque nappe et le taux de fibre insérée hors du plan de chacune des nappes pour assurer à la fois une bonne tenue dans le plan de l'insert et dans son épaisseur. D'autre part, elle nécessite une imprégnation des nappes et des tronçons par la résine avant polymérisation, laissant un maximum de ces tronçons de fibre rectilignes et perpendiculaires aux nappes, afin qu'ils puissent jouer leur rôle de résistance à la traction.

L'invention concerne un procédé de fabrication d'un insert de renfort selon lequel,
a) on forme des nappes superposées de fibre,
b) on solidarise entre elles l'ensemble des nappes superposées par piquage sans nouage ou avec nouage et tassage, à l'aide d'une fibre de solidarisation traversant ces nappes de manière à former des tronçons de fibre, au moins certains de ces tronçons étant rectilignes,
c) on imprègne l'ensemble ainsi obtenu par une résine,
d) on polymérise la résine pour former une pièce de matière composite,
e) on démoule cette pièce de matière composite.
Selon l'invention,
- la densité de fibres totale constituant l'insert de renfort est comprise entre 50% et 60% du volume de l'insert et les tronçons de fibre occupent entre 3% et 10% du volume de l'insert,
- et l'opération d'imprégnation de l'étape c)est réalisée de sorte à ne pas compresser ledit ensemble ainsi obtenu pour que lesdits tronçons restent rectilignes après polymérisation de la résine.

Dans un mode de réalisation préférentiel, l'opération d'imprégnation de l'étape c) est obtenue par l'exécution des étapes successives suivantes :
on met en place l'ensemble dans un récipient souple fermé comportant un orifice de sorte à ne pas compresser ledit ensemble,
- on place ce récipient dans une étuve à vide et on chauffe ce récipient à une température d'imprégnation.
- on injecte la résine à l'état visqueux dans l'orifice du récipient pour imprégner l'ensemble.

Avantageusement, on usine la pièce de matière composite aux cotes requises pour former l'insert.

L'invention concerne enfin un procédé de réalisation d'une structure sandwich avec au moins un insert, selon lequel on fabrique la structure sandwich par assemblage d'un ensemble comprenant au moins deux parois disposées respectivement sur des faces opposées externes d'une âme par polymérisation d'une colle ou d'une première résine, et on forme un évidement dans au moins l'âme de cette structure sandwich, l'évidement recevant au moins une partie de cet insert.

Selon l'invention,
- on place ladite au moins une partie de l'insert dans l'évidement, au moins une portion de la surface externe de cet insert étant préalablement recouverte d'un film de colle non polymérisée ou d'une deuxième résine,
- on assemble ensuite par polymérisation,
et l'insert est un insert de renfort tel que décrit précédemment.

Dans un mode de réalisation préféré, on assemble l'ensemble comprenant au moins deux parois et une âme par collage, la colle recouvrant au moins une portion de la surface externe de l'insert étant alors identique à la colle servant à l'assemblage de cet ensemble.

De même, la deuxième résine recouvrant au moins une portion de la surface externe de l'insert peut être identique à la première résine utilisée pour l'assemblage dudit ensemble.

Dans différents modes de réalisation possibles, l'invention sera décrite plus en détail en référence aux dessins annexés dans (lesquels :
- la figure 1 représente schématiquement une structure sandwich comportant un insert selon un premier mode de réalisation de l'art antérieur;
- la figure 2 représente schématiquement une structure sandwich comportant un insert selon un deuxième mode de réalisation de l'art antérieur;
- la figure 3 est une représentation schématique d'un insert de renfort dans un mode de réalisation particulier ;
- la figure 4 est une vue en coupe transversale schématique d'un insert de renfort selon un mode de réalisation particulier.

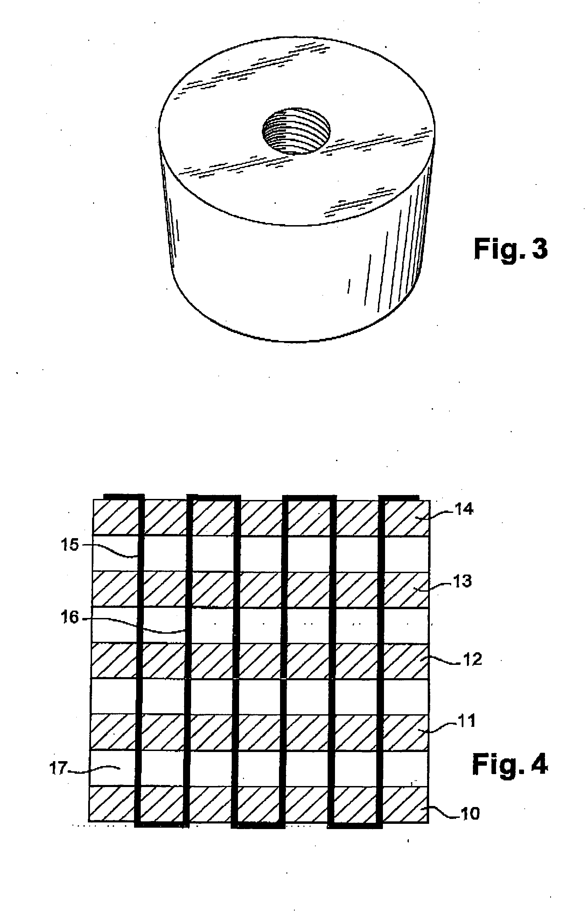

La Figure 4 montre un insert de renfort selon un mode de réalisation particulier de l'invention. Cet insert comprend des nappes superposées 10-14 de fibre qui sont solidarisées entre elles par une fibre de solidarisation de manière à former des tronçons de fibre 15,16. Cette fibre de solidarisation traverse par exemple ces nappes 10-14 en passant et repassant à travers elles pour former ces tronçons de fibre 15,16. Les tronçons de fibre 15,16 et les nappes 10-14 sont noyés dans une résine durcie 17. Cette résine 17 est avantageusement une résine thermodurcissable du type résine époxy, résine phénolique, polyesters insaturés ou autre. Au moins certains de ces tronçons sont rectilignes. Préférentiellement, on contrôle l'imprégnation des nappes et des tronçons par la résine avant polymérisation pour que ensemble des tronçons 15,16 soit rectiligne. Il s'agit en effet d'éviter toute compression de la pièce constituée par les nappes 10-14 solidarisées entre elles par la fibre de solidarisation lors de sa disposition dans le moule d'imprégnation afin que les tronçons de fibre ne soient pas compressés. Une telle compression peut entrainer, en effet, une "torsion" des tronçons qui ne peuvent plus dés lors assurer correctement leur rôle de résistance à la traction. Dans un mode de réalisation, ces tronçons rectilignes 15,16 sont parallèles entre eux et orientés suivant une direction inclinée par rapport à la normale aux nappes 10-14 qui sont planes. Dans un autre mode de réalisation, ces tronçons rectilignes 15,18 sont orientés suivant une direction parallèle à la normale aux nappes.

Les tronçons de fibre ont pour rôle de renforcer la résistance à la traction de l'insert. Cependant, une introduction de fibre dans une direction hors du plan de chaque nappe n'est pas sans conséquence sur la tenue des propriétés mécaniques de celle-ci. Cette introduction a en effet pour conséquence de diminuer le taux de fibre des nappes et donc les propriétés mécaniques de l'insert dans leur plan. L'insert doit donc comprendre un taux de fibre hors des plans des nappes qui soit optimal pour assurer une bonne tenue en traction de l'insert sans pour autant trop détériorer les propriétés dans le plan de chaque nappe 10-14. Ainsi, la densité de fibres totale constituant l'insert est comprise entre 50% et 60% du volume de l'insert et les tronçons de fibre 15,16 occupent entre 3% et 10% du volume de l'insert. Préférentiellement, ces tronçons de fibre 15,16 occupent entre 3% et 6% du volume de l'insert, et encore mieux entre 4,5% et 5% de ce volume.

L'insert doit présenter également une épaisseur suffisante pour que l'on puisse former dans cette épaisseur au moins un évidement apte à recevoir un moyen de serrage tel qu'une vis. Cet évidemment est de préférence taraudé.

La fibre de solidarisation et les fibres constituant les nappes 10-14 sont des fibres à haute résistance mécanique ou à haut module, par exemple. Elles peuvent être choisies également de manière à minimiser les contraintes apparaissant à la liaison paroi/insert et âme/insert de la structure sandwich dans laquelle il est destiné à être placé, ces contraintes étant liées aux différences de dilatation thermique de ces éléments.

La fibre de solidarisation et les fibres constituant les nappes peuvent ainsi être choisies dans le groupe, donné à titre non limitatif, comprenant les fibres de verre, les fibres de carbone, les fibres de silice, les fibres de graphite, les fibres de quartz, les fibres de carbure de silicium, les fibres aramides (par exemple, Kevlar), les fibres de type PBO (polybenzoxazole), les fibres de polyéthylène, ...

L'assemblage des nappes entre elles peut être obtenu par piquage avec ou sans nouage. Les nappes sont tassées mécaniquement lors de leur assemblage. Dans le cas du piquage sans nouage, le fil de solidarisation est maintenu en place par friction.

Dans les brevets FR 2 610 951, FR 2 753 993 et FR 2 832 738 de la demanderesse, on décrit des procédés et machines pour la réalisation de nappes superposées et solidarisées entre elles par une fibre de solidarisation, du type ci-dessus.

En particulier, dans le brevet FR 2 832 738, on décrit un dispositif de tramage pour la réalisation d'armatures textiles épaisses constituées de nappes superposées de fils solidarisées entre elles par un fil de liage transversant lesdites nappes, ledit dispositif comprenant un cadre muni latéralement et à sa périphérie de picots d'accrochage régulièrement distribués, des moyens de dépose à l'aide desdits picots du fil et des moyens de tassage des nappes. Les picots sont constitués de tiges comprenant un premier tronçon partant du cadre et présentant une légère inclinaison vers l'extérieur du cadre et un second tronçon rectiligne prolongeant le premier et présentant une inclinaison vers l'extérieur du cadre sensiblement plus accentuée. Les moyens de dépose du fil sont constitués par une pluralité de passettes entraînant chacune un fil, et mues simultanément en étant espacées d'un intervalle égal à n fois l'intervalle entre picots, n étant un nombre premier. Les moyens de tassage des nappes sont constitués de moyens mécaniques aptes à presser l'ensemble desdites nappes sur leur pourtour.

Suivant un mode de réalisation, l'inclinaison des premiers tronçons des picots est de l'ordre de quelques degrés, cependant que celle des seconds tronçons est de l'ordre de 45°.

Un tel dispositif permet un tramage à une hauteur constante, celle correspondant à l'inflexion de l'axe des picots, le fil étant placé à hauteur du second tronçon en sorte que par une descente naturelle des fils le long desdits seconds tronçons la nappe en cours de constitution se stabilise d'elle-même à hauteur de ladite inflexion, cependant que les nappes formées antérieurement reculent d'elles-mêmes le long du premier tronçon, grâce à sa propre inclinaison, pour faire ainsi la place à la nappe nouvelle.

L'invention concerne également un procédé de fabrication d'un insert de renfort tel que décrit précédemment. Selon ce procédé, on forme des nappes superposées de fibre et on solidarise entre elles l'ensemble de ces nappes superposées par piquage sans nouage ou avec nouage et tassage, à l'aide d'une fibre de solidarisation traversant les nappes de manière à former des tronçons de fibre 15, 16. Cette fibre de solidarisation peut par exemple passer et repasser à travers les nappes pour former ces tronçons de fibre 15,16. On réalise ensuite une étape d'imprégnation de cet ensemble par une résine 17 tout en prenant bien soin de ne pas compresser l'ensemble nappes/tronçons pour que ces tronçons restent rectilignes. Dans un mode de réalisation préféré, on met en place l'ensemble dans un récipient souple fermé comportant un orifice de manière à ne pas compresser cet ensemble. Ce récipient est par exemple un film plastique thermosoudé. On place ce récipient dans une étuve à vide. Avantageusement, cet ensemble est maintenu verticalement sans contrainte dans le récipient par deux plaques métalliques externes au récipient afin d'éviter toute contraintes sur les tronçons de fibre. Puis, on chauffe ce récipient à une température d'imprégnation, par exemple 110°C. On injecte la résine préalablement préchauffée de sorte à la rendre visqueuse pour qu'elle mouille convenablement les fibres des nappes 10-14 et des tronçons 15,16. On injecte ladite résine 17 à l'état visqueux par l'orifice dans le récipient. On met sous vide l'étuve, typiquement à une pression de l'ordre de quelques centaines de millibars. Après que l'air emprisonné sous la résine 17 se soit totalement échappé au travers de celle-ci et qu'elle ait été pompée, on rétablit la pression atmosphérique de sorte que ladite résine imprègne complètement ledit ensemble. Cette phase d'imprégnation peut durer environ 1 heure afin d'obtenir une imprégnation satisfaisante.

On polymérise ensuite cette résine pour former une pièce de matière composite par exemple par élévation de la température à 200°C pendant plusieurs heures. Enfin, on démoule cette pièce de matière composite et on l'usine aux cotes requises pour former l'insert.

La densité de fibres totale constituant l'insert de renfort est comprise entre 50% et 60% du volume de l'insert et les tronçons de fibre 15,16 occupent entre 3% et 10% du volume de l'insert. Préférentiellement, ces tronçons de fibre 15,1 occupent entre 3% et 6% du volume de l'insert, et encore mieux entre 4,5% et 5% de ce volume.

Ce procédé présente l'avantage de minimiser les coûts de fabrication de l'insert en évitant tous les nettoyages d'une installation utilisée dans les méthodes d'imprégnation du type RTM (Moulage par transfert de résine - "Resin Transfer Moulding"), infusion de résine ("RFI"-"Resin Film Infusion"), ... qui peuvent néanmoins être mises en oeuvre pour la réalisation de l'insert selon l'invention. Ces techniques étant bien connues de l'homme de l'art ne seront pas décrites ici.

L'invention concerne enfin un procédé de réalisation d'une structure sandwich avec au moins un insert, selon lequel on fabrique ladite structure sandwich par assemblage d'un ensemble comprenant au moins deux parois 2,3 disposées respectivement sur des faces opposées externes d'une âme 4 par polymérisation d'une colle ou d'une première résine. Avantageusement, en cas d'assemblage par polymérisation d'une première résine, cet ensemble comporte de plus au moins un film de matériau intumescent placé entre l'âme 4 et chacune desdites parois 2,3.

On forme un évidement dans au moins l'âme 4 de ladite structure sandwich 1 pour y placer au moins une partie d'un insert de renfort tel que décrit plus haut. On recouvre pour cela préalablement au moins une portion de la surface externe de cet insert avec un film de colle non polymérisée ou d'une deuxième résine. Cette deuxième résine est un film, une poudre ou un liquide. Elle peut être identique à la première résine. Une fois l'insert mis en place, on peut assembler par co-cuisson l'insert et la structure sandwich 1 par exemple en utilisant une étuve.

Cet évidemment peut être réalisé avant l'assemblage dudit ensemble de sorte que ledit au moins un insert soit fixé simultanément avec l'ensemble. Alternativement, il peut être réalisé après que l'ensemble ait été assemblé.

De préférence, on choisit la nature des fibres de l'insert de manière à minimiser les contraintes apparaissant à la liaison paroi/insert et âme/insert, ces contraintes étant liées aux différences de dilatation thermique de ces éléments. On évite ainsi l'apparition de contrainte au niveau de la liaison insert/structure sandwich 1 pouvant entraîner des défauts de fabrication, le produit final n'atteignant pas alors les propriétés mécaniques attendues. A titre d'exemple et dans un mode de mise en oeuvre de l'invention, on choisira un insert réalisé à base de fibres de verre pour une structure sandwich à peau en aluminium. Si les parois 2,3 sont des armatures souples fibreuses, on pourra également choisir pour l'insert des fibres identiques aux fibres constituant ces armatures. A titre d'exemple et dans un mode de mise en oeuvre, l'insert comprend des fibres en carbone et la structure sandwich 1 comporte des peaux en carbone.

Dans un mode de réalisation particulier, l'insert est placé entre les parois 2,3 de la structure sandwich avant assemblage de l'ensemble comprenant l'âme 4 et au moins les deux parois 2,3. Pour cela, on réalise d'abord dans l'âme 4 un évidement apte à recevoir cet insert, puis on recouvre cet insert sur au moins une portion de sa surface externe d'une deuxième résine ou d'un film de colle non polymérisée. On place l'insert dans l'évidement et on polymérise. L'évidement est adapté à la forme de l'insert qui peut être cylindrique, rectangulaire ou autre.

Dans une variante de ce mode de réalisation, l'insert comprend un corps 6 et une bride, ou tête plate 7, à au moins une de ses extrémités. On réalise préalablement à l'assemblage de l'ensemble comprenant l'âme 4 et au moins les deux parois 2-3, un évidement sur au moins une partie de l'épaisseur de l'âme 4 et au moins dans la paroi 2,3 destinée à recevoir sur sa surface externe ladite bride 7. On recouvre au moins une portion de cette bride 7 d'une deuxième résine ou d'un film de colle non polymérisée pour assurer l'étanchéité de la structure sandwich, on place l'insert en position et on polymérise.

Dans le cas où l'évidemment est réalisé avant assemblage de l'ensemble âme/au moins deux parois, cet assemblage étant réalisé par injection et polymérisation d'une première résine dans un moule fermé et chauffé, au moins une portion de la surface externe de l'insert étant par ailleurs recouvert d'une colle, l'étape de polymérisation est alors réalisée comme suit :
- si la température de polymérisation de cette colle est inférieure à la température de polymérisation de la première résine, on polymérise la colle préalablement à l'injection de cette première résine. Puis, on chauffe le moule à la température de polymérisation de la première résine et on injecte ensuite cette résine.
- si la température de polymérisation de cette colle est égale à la température de polymérisation de ladite résine, on injecte cette résine après polymérisation de la colle.

## Revendications

1. Procédé de fabrication d'un insert de renfort selon lequel :
a) on forme des nappes (10-14) superposées de fibre,
b) on solidarise entre elles l'ensemble desdites nappes (10-14) superposées par piquage sans nouage ou avec nouage et tassage, à l'aide d'une fibre de solidarisation traversant lesdites nappes de manière à former des tronçons de fibre (15,16), au moins certains desdits tronçons (15,16) étant rectilignes,
c) on imprègne l'ensemble ainsi obtenu par une résine (17),
d) on polymérise ladite résine (17) pour former une pièce de matière composite,
e) on démoule ladite pièce de matière composite, et selon lequel:
la densité de fibres totale constituant l'insert de renfort est comprise entre 50% et 60% du volume de l'insert et les tronçons de fibre (15,16) occupent entre 3% et 10% du volume de l'insert,
l'opération d'imprégnation de l'étape c) est réalisée de sorte à ne pas compresser ledit ensemble ainsi obtenu de manière que lesdits tronçons (15,16) restent rectilignes.

2. Procédé selon la revendication 1, **caractérisé en ce que** l'opération d'imprégnation de l'étape c) est réalisée par l'exécution des étapes successives suivantes :
- on met en place ledit ensemble dans un récipient souple fermé comportant un orifice,
- on place ce récipient dans une étuve à vide et on chauffe ce récipient à une température d'imprégnation,
- on injecte ladite résine à l'état visqueux dans l'orifice du récipient pour imprégner ledit ensemble.

3. Procédé selon la revendication 2, **caractérisé en ce que** ledit ensemble est maintenu verticalement sans contrainte dans ledit récipient par deux plaques métalliques.

4. Procédé selon la revendication 2 ou 3, **caractérisé en ce qu'**on met ladite étuve sous vide auprès injection de ladite résine (17), et **en ce qu'**on rétablit la pression atmosphérique une fois l'air évacué du récipient de sorte que ladite résine imprègne complètement ledit ensemble.

5. Procédé selon l'une quelconque des revendications 2 à 4,
**caractérisé en ce que** ledit récipient est un film plastique thermosoudé.

6. Procédé selon l'une quelconque des revendications 1 à 5,
**caractérisé en ce que** les tronçons de fibre (15 ,16) occupent entre 3% et 6% du volume de l'insert

7. Procédé selon la revendication 6, **caractérisé en ce que** les tronçons de fibre (15,16) occupent entre 4,5% et 5% du volume de l'insert.

8. Procédé de réalisation d'une structure sandwich (1) avec au moins un insert, selon lequel on fabrique ladite structure sandwich (1) par assemblage d'un ensemble comprenant au moins deux parois (2,3) disposées respectivement sur des faces opposées externes d'une âme (4) par polymérisation d'une colle ou d'une première résine (17), et on forme un évidement dans au moins l'âme (4) de ladite structure sandwich pour recevoir au moins une partie dudit insert,
**caractérisé en ce qu'**on place ladite au moins une partie de l'insert dans ledit évidement, au moins une portion de la surface externe dudit insert étant préalablement recouverte d'un film de colle non polymérisée ou d'une deuxième résine, et on assemble par polymérisation et **en ce que** l'insert est un insert de renfort réalisé selon le procédé selon l'une quelconque des revendications 1 à 7.

9. Procédé selon la revendication 8, **caractérisé en ce qu'**on choisit la nature des fibres de l'insert pour minimiser les contraintes apparaissant à la liaison paroi/insert et âme/insert, lesdites contraintes étant liées aux différences de dilatation thermique de ces éléments.

10. Procédé selon la revendication 8 ou 9, **caractérisé en ce que** les parois (2,3) sont des armatures en matériaux composites et **en ce que** les fibres de l'insert sont identiques aux fibres constituant lesdites armatures.

11. Procédé selon l'une quelconque des revendications 8 à 10,
**caractérisé en ce que** l'ensemble comprenant au moins deux parois (2,3) et une âme (4) comporte de plus au moins un film de matériau intumescent placé entre l'âme (4) et chacune desdites parois (2,3).

12. Procédé selon l'une quelconque des revendications 8 à 11, **caractérisés en ce qu'**on réalise ledit évidemment avant l'assemblage dudit ensemble.

13. Procédé selon l'une quelconque des revendications 8 à 11, **caractérisé en ce qu'**on réalise ledit évidement après assemblage dudit ensemble,

## Claims

1. A method of manufacturing a reinforcing insert according to which:
a) superimposed layers (10-14) of fibre are formed,
b) all said superimposed layers (10, 14) are secured together by stitching without knotting or with knotting and tamping, using a securing fibre passing through said layers so as to form portions of fibre (15, 16), at least some of said portions (15, 16) being rectilinear,
c) the assembly thus obtained is impregnated with a resin (17),
d) said resin (17) is polymerised in order to form a piece of composite material,
e) said piece of composite material is removed from the mould,
and according to which:
the total density of fibres constituting the reinforcing insert is between 50% and 60% of the volume of the insert and the portions of fibre (15, 16) occupy between 3% and 10% of the volume of the insert,
the impregnation operation of step c) is performed so as to compress said assembly thus obtained so that said portions (15, 16) remain rectilinear.

2. A method according to claim 1, **characterised in that** the impregnation operation of step c) is performed by executing the following successive steps:
- said assembly is placed in a closed flexible receptacle comprising an orifice,
- said receptacle is placed in a vacuum oven and said receptacle is heated to an impregnation temperature,
- said resin is injected in the viscous state into the orifice of the receptacle in order to impregnate said assembly.

3. A method according to claim 2, **characterised in that** said assembly is held vertically without stress in said receptacle by two metal plates.

4. A method according to claim 2 or 3, **characterised in that** said oven is put under vacuum after injection of said resin (17), and **in that** atmospheric pressure is reestablished once the air has been discharged from the receptacle so that said resin completely impregnates said assembly.

5. A method according to any one of claims 2 to 4,
**characterised in that** said receptacle is a heat-welded plastic film.

6. A method according to any one of claims 1 to 5,
**characterised in that** the portions of fibre (15, 16) occupy between 3% and 6% of the volume of the insert.

7. A method according to claim 6, **characterised in that** the portions of fibre (15, 16) occupy between 4.5% and 5% of the volume of the insert.

8. A method of producing a sandwich structure (1) with at least one insert, according to which said sandwich structure (1) is fabricated by assembling an assembly comprising at least two walls (2, 3) disposed respectively on external opposite faces of a core (4) by polymerisation of an adhesive or a first resin (17), and a recess is formed in at least the core (4) of said sandwich structure in order to receive at least one part of said insert,
**characterised in that** said at least one part of the insert is placed in said recess, at least one portion of the external surface of said insert being covered in advance by a film of non-polymerised adhesive or a second resin, and assembly is carried out by polymerisation, and **in that** the insert is a reinforcing insert produced by the method according to any one of claims 1 to 7.

9. A method according to claim 8, **characterised in that** the nature of the fibres of the insert is chosen so as to minimise the stresses appearing at the wall/insert and core/insert connection, said stresses relating to the differences in thermal expansion of these elements.

10. A method according to claim 8 or 9, **characterised in that** the walls (2, 3) are frames made from composite material and **in that** the fibres of the insert are identical to the fibres constituting said frames.

11. A method according to any one of claims 8 to 10, **characterised in that** the assembly comprising at least two walls (2, 3) and a core (4) comprises in addition at least one film of intumescent material placed between the core (4) and each of said walls (2, 3).

12. A method according to any one of claims 8 to 11, **characterised in that** said recess is produced before said assembly is assembled.

13. A method according to any one of claims 8 to 11, **characterised in that** said recess is produced after said assembly is assembled.

## Patentansprüche

1. Verfahren zum Herstellen eines Verstärkungseinsatzes, in dem:
a) übereinander liegende Faserlagen (10-14) gebildet werden,
b) die Gesamtheit der übereinander liegenden Lagen (10-14) durch Durchstechen ohne Binden oder mit Binden und Zusammendrücken mit Hilfe einer durch die Lagen verlaufenden Befestigungsfaser aneinander befestigt werden, derart, dass Faserteilstücke (15, 16) gebildet werden, wobei wenigstens Bestimmte dieser Teilstücke (15, 16) geradlinig sind,
c) die auf diese Weise erhaltene Gesamtheit mit einem Harz (17) imprägniert wird,
d) das Harz (17) polymerisiert wird, um ein Verbundwerkstoffteil zu bilden,
e) das Verbundwerkstoffteil aus der Form entnommen wird,
und in dem:
die Gesamtdichte der Fasern, die den Verstärkungseinsatz bilden, im Bereich von 50 % bis 60 % des Volumens des Einsatzes liegt und die Faserteilstücke (15, 16) ein Volumen im Bereich von 3 % bis 10 % des Volumens des Einsatzes einnehmen,
wobei der Imprägnierungsvorgang des Schrittes c) in der Weise ausgeführt wird, dass die auf diese Weise erhaltene Gesamtheit nicht komprimiert wird, derart, dass die Teilstücke (15, 16) geradlinig bleiben.

2. Verfahren nach Anspruch 1, **dadurch gekennzeichnet, dass** der Imprägnierungsvorgang des Schrittes c) durch Ausführen der folgenden aufeinander folgenden Schritte ausgeführt wird:
- Anordnen der Gesamtheit in einem verformbaren geschlossenen Behälter, der eine Öffnung aufweist,
- Anordnen dieses Behälters in einer Unterdruckvorrichtung und Erhitzen dieses Behälters auf eine Imprägnierungstemperatur,
- Einleiten des Harzes im viskosen Zustand in die Öffnung des Behälters, um die Gesamtheit zu imprägnieren.

3. Verfahren nach Anspruch 2, **dadurch gekennzeichnet, dass** die Gesamtheit durch zwei Metallplatten in dem Behälter ohne Beanspruchung vertikal gehalten wird.

4. Verfahren nach Anspruch 2 oder 3, **dadurch gekennzeichnet, dass** die Vorrichtung nach dem Einleiten des Harzes (17) mit Unterdruck beaufschlagt wird und dass der Atmosphärendruck wiederhergestellt wird, sobald die Luft aus dem Behälter evakuiert worden ist, derart, dass das Harz die Gesamtheit vollständig imprägniert.

5. Verfahren nach einem der Ansprüche 2 bis 4, **dadurch gekennzeichnet, dass** der Behälter ein wärmegeschweißter Kunststofffilm ist.

6. Verfahren nach einem der Ansprüche 1 bis 5, **dadurch gekennzeichnet, dass** die Faserteilstücke (15, 16) ein Volumen im Bereich von 3 % bis 6 % des Volumens des Einsatzes einnehmen.

7. Verfahren nach Anspruch 6, **dadurch gekennzeichnet, dass** die Faserteilstücke (15, 16) ein Volumen im Bereich von 4,5 % bis 5 % des Volumens des Einsatzes einnehmen.

8. Verfahren zur Herstellung einer Sandwich-Struktur (1) mit wenigstens einem Einsatz, in dem die Sandwich-Struktur (1) durch Zusammenfügen einer Gesamtheit hergestellt wird, die wenigstens zwei Wände (2, 3) aufweist, die auf den gegenüberliegenden äußeren Flächen eines Kerns (4) durch Polymerisation eines Klebstoffs oder eines ersten Harzes (17) angeordnet werden, und zumindest in dem Kern (4) der Sandwich-Struktur eine Aussparung gebildet wird, um wenigstens einen Teil des Einsatzes aufzunehmen,
**dadurch gekennzeichnet, dass** wenigstens der eine Teil des Einsatzes in der Aussparung angeordnet wird, wobei wenigstens ein Abschnitt der äußeren Oberfläche des Einsatzes vorher mit einem nicht polymerisierten Klebstofffilm oder mit einem zweiten Harz beschichtet wird, und dass durch Polymerisation ein Zusammenfügen erfolgt und dass der Einsatz ein Verstärkungseinsatz ist, der gemäß dem Verfahren nach einem der Ansprüche 1 bis 7 hergestellt wird.

9. Verfahren nach Anspruch 8, **dadurch gekennzeichnet, dass** die Art der Fasern des Einsatzes in der Weise gewählt wird, dass die Beanspruchungen, die bei der Verbindung Wand/Einsatz und Kern/Einsatz auftreten, minimal sind, wobei die Beanspruchungen mit der unterschiedlichen Wärmeausdehnung dieser Elemente einhergehen.

10. Verfahren nach Anspruch 8 oder 9, **dadurch gekennzeichnet, dass** die Wände (2, 3) Beläge aus Verbundwerkstoffen sind und dass die Fasern des Einsatzes die gleichen Fasern wie jene sind, die die Beläge bilden.

11. Verfahren nach einem der Ansprüche 8 bis 10, **dadurch gekennzeichnet, dass** die Gesamtheit, die wenigstens zwei Wände (2, 3) und einen Kern (4) aufweist, außerdem wenigstens einen Film aus einem Intumeszenzmaterial aufweist, der zwischen dem Kern (4) und jeder der Wände (2, 3) angeordnet ist.

12. Verfahren nach einem der Ansprüche 8 bis 11, **dadurch gekennzeichnet, dass** die Aussparung vor der Zusammenfügung der Gesamtheit verwirklicht wird.

13. Verfahren nach einem der Ansprüche 8 bis 11, **dadurch gekennzeichnet, dass** die Aussparung nach der Zusammenfügung der Gesamtheit verwirklicht wird.
